# EUROPEAN PATENT SPECIFICATION

(11) **EP 1 106 488 B1**
(45) Date of publication and mention of the grant of the patent: **02.07.2003**
(21) Application number: 00204240.6
(22) Date of filing: 29.11.2000
(51) Int. Cl.: B62D 55/10, B62D 55/084

(54) **Tractor with transverse supporting member**
Traktor mit Querträger
Tracteur avec traverse de support

(30) Priority: 10.12.1999 IT BO990672
(43) Date of publication of application: 13.06.2001
(73) Proprietor: CNH Italia S.p.A., 41100 Modena (IT)
(72) Inventor: Pertusi, Pierluigi, Campogalliano (Modena) (IT)
(74) Representative: Vandenbroucke, Alberic

(56) References cited:
- EP-A- 0 715 030
- WO-A-99/01331
- GB-A- 1 352 032
- US-A- 3 894 598

## Description

The present invention relates to an industrial vehicle, in particular a farm tractor provided with crawler tracks.

As is well known, a conventional crawler tractor may comprise the following parts :
- a main frame having a first and a second longitudinal side symmetrical with respect to a central longitudinal axis of symmetry;
- an engine;
- a cab for at least one driver;
- a rear axle connected mechanically to the engine;
- a first and a second rear drive wheel associated with the first and second side respectively, and supported by the rear axle;
- a first and a second track tensioning wheel associated with the first and second side respectively, each track tensioning wheel also being associated with a respective track tensioning device;
- a first and a second toothed rubber track associated with the first and second side respectively;
- a first and a second carriage assembly of the first and second toothed rubber track respectively, the first and second carriage assembly each comprising at least one respective supporting roller;
- a first and a second longitudinal beam respectively connecting the first rear wheel to the first track tensioning wheel, and the second rear wheel to the second track tensioning wheel; and
- a transverse supporting device mechanically connecting the first longitudinal beam to the second longitudinal beam.

It is further known that some currently marketed crawler tractors provide for adjusting the distance between the tracks by adjusting the overall length of the transverse supporting device. This is useful, for example, to adapt the width of the tractor to the requirements of the field, to the distance between adjacent rows of crops, or to the particular crops for which the tractor is designed.

A crawler tractor having the above characteristics is described in WO 99/01331. As a result of the rigid connection of the longitudinal beams to the chassis through the transverse supporting device, the track carriage assemblies have a fixed orientation relative to the chassis and are unable to adapt to the contours of the ground.

The solution proposed by the present invention is extremely straightforward and reliable when compared with those of the prior art and provides for rotating parts of the transverse supporting device about respective articulated joints to adapt the track to particular ground conditions.

According to the present invention, a crawler vehicle is provided comprising :
- a main frame having a first and a second longitudinal side symmetrical with respect to a central longitudinal axis of symmetry;
- an engine;
- a rear axle drivingly connected to said engine;
- a first and a second rear drive wheel associated with said first side and said second side respectively, said wheels being supported by said rear axle;
- a first and a second front track tensioning wheel associated with said first and said second side respectively, each front track tensioning wheel also being associated with a respective track tensioning device;
- a first and a second toothed rubber track associated with said first and said second side respectively;
- a first and a second carriage assembly of said first track and said second track respectively, said first and said second carriage assembly each comprising at least one respective supporting roller;
- a first longitudinal beam and a second longitudinal beam respectively connecting said first rear wheel to said first front track tensioning wheel, and said second rear wheel to said second front track tensioning wheel; and
- a transverse supporting device connecting said first longitudinal beam to said second longitudinal beam; said transverse supporting device comprising :

- a first member connected mechanically to said first longitudinal beam;
- a second member connected mechanically to said second longitudinal beam; and
- a third member suspended centrally from said frame; the positions of said first member and said second member being adjustable and fixable with respect to said third member by means of respective adjusting and fastening means, so as to adapt the overall length of said transverse supporting device to the desired width of the vehicle.

The vehicle is characterized in that said first member and said second member each comprise a first portion integral with the respective longitudinal beam and a second portion connected mechanically to the respective first portion by means of a respective articulated joint.

An embodiment of the present invention will now be described, by way of example, with reference to the accompanying drawings, in which :
Figure 1 shows an overall side view of a crawler tractor according to the present invention;
Figure 2 shows a plan view (with parts in section and parts removed for clarity) of the Figure 1 tractor;
Figure 3 illustrates a front view (with parts in section and parts removed for clarity) of the Figure 1 and 2 tractor, showing an embodiment of a transverse supporting device according to the present invention;
Figure 4 shows a detail of the Figure 1-3 tractor to a larger scale; and
Figure 5 shows a front view (with parts in section and parts removed for clarity) of the Figure 1 vehicle, showing an embodiment of a transverse supporting device from which the present invention departs.

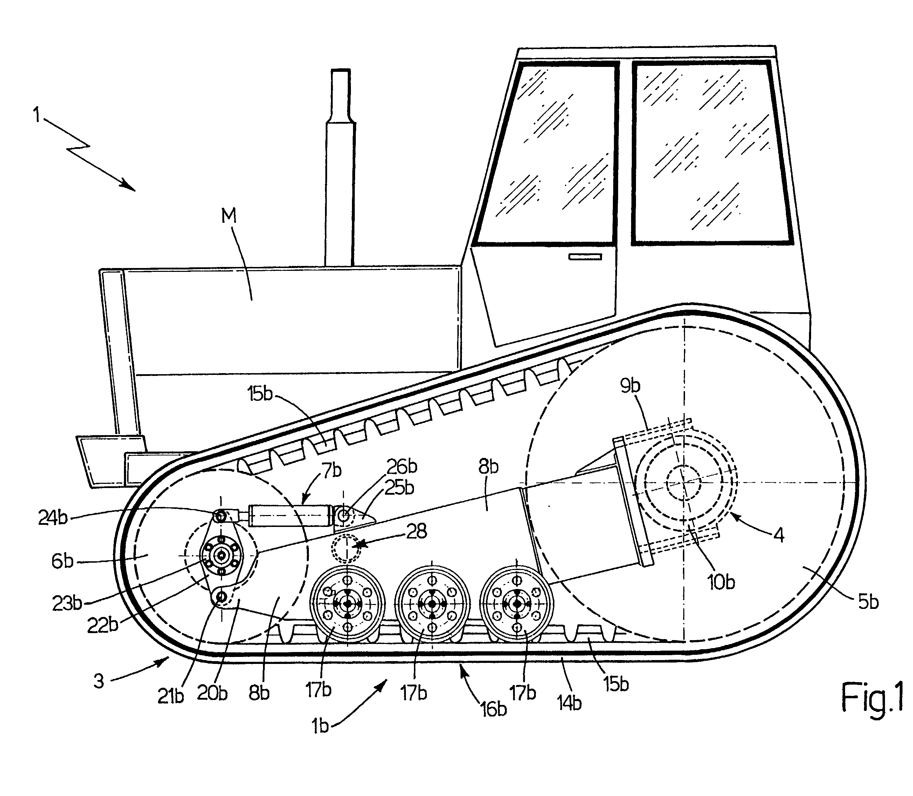

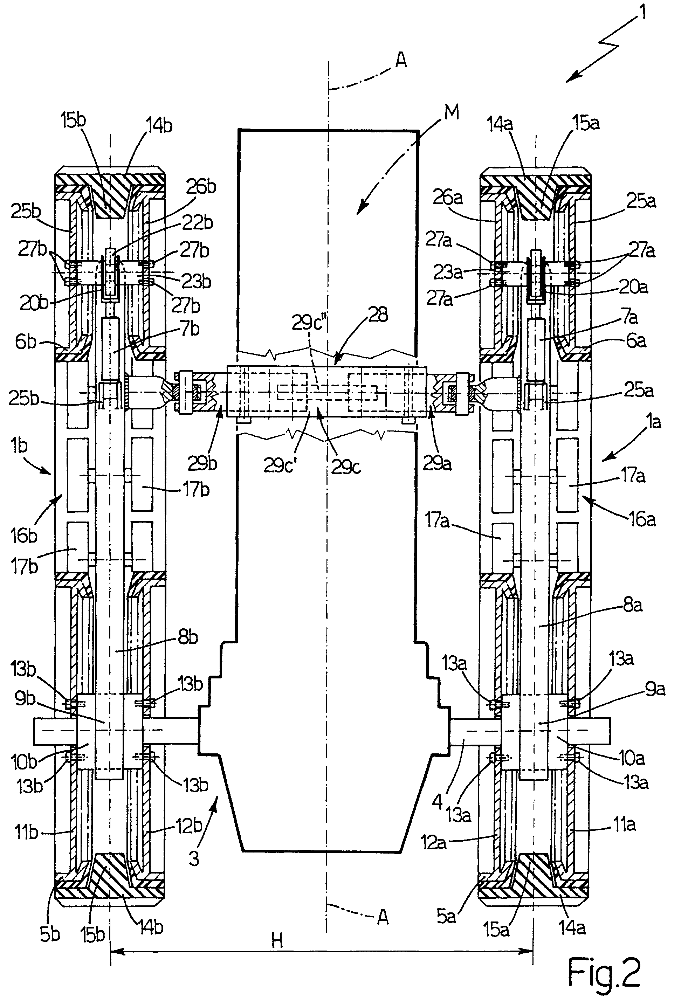

Referring to figures 1 to 4, vehicle 1, being more particularly an agricultural tractor, comprises a first longitudinal side 1a and a second longitudinal side 1b identical with and parallel to each other, and symmetrical with respect to a longitudinal axis of symmetry A (Figures 2, 3, 5). Consequently, anything explained hereinafter in connection with side 1a also applies to side 1b and vice versa.

Vehicle 1 comprises an internal combustion engine M (not shown in detail) and a cab 2 for a driver (not shown). Engine M and cab 2 are supported on a frame 3 comprising a rear axle 4 connected mechanically to engine M by mechanical means (not shown) for driving axle 4 and, hence, two rear wheels 5a, 5b fitted to axle 4 and associated with respective sides 1a, 1b.

To each side 1a, 1b, a respective track tensioning wheel 6a, 6b is associated having a respective track tensioning device 7a, 7b (Figure 1) described in detail later on and each comprising a known hydraulic cylinder.

Rear wheel 5a is connected mechanically to track tensioning wheel 6a by a longitudinal box-shaped beam 8a having a member 9a for connection to a hub 10a to which wheel 5a is fitted. For facilitating assembly to hub 10a, wheel 5a is divided into two rims 11a, 12a connected integrally to hub 10a by bolts 13a. Hubs 10a, 10b are fitted to rear axle 4 by wedge means (not shown) enabling adjustment of the distance between the hubs.

Rear wheel 5a is connected mechanically to track tensioning wheel 6a by a conventional toothed rubber track 14a having, in a conventional manner, a number of teeth 15a for engaging cavities on both the outer periphery of rear wheel 5a and on track tensioning wheel 6a.

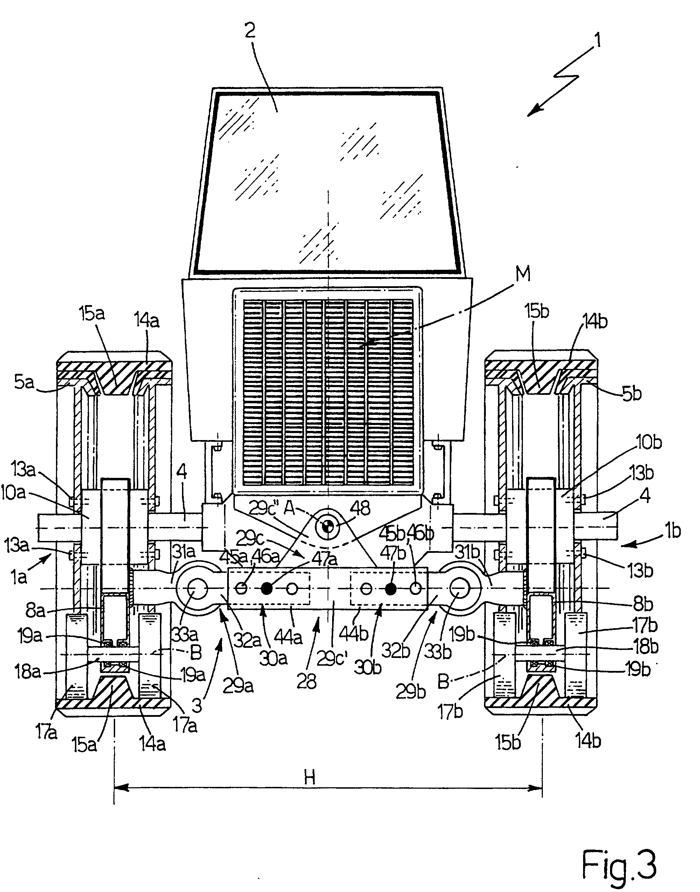

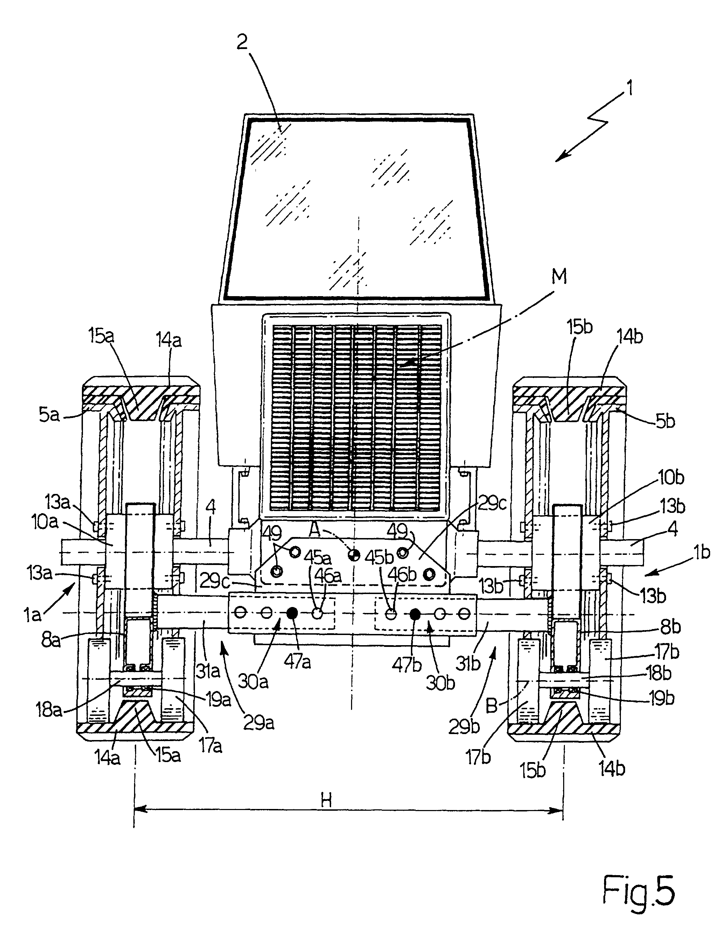

Longitudinal beam 8a is associated with a respective carriage assembly 16a comprising a number of rollers 17a for supporting track 14a. As shown more clearly in Figures 3 and 5, rollers 17a are arranged in pairs on opposite sides of beam 8a, and are supported on beam 8a by means of a shaft 18a with the interposition of two bearings 19a. The longitudinal axis B of shaft 18a is arranged crosswise to axis A. It will be appreciated that rollers 17a are rotated by the track 14a when the rear wheel 5a is driven by engine M.

As shown in more detail in Figure 1, beam 8b terminates at the front with a beak portion 20b having a pin 21b about which rotates a plate 22b integral with a hub 23b of track tensioning wheel 6b. The opposite end of plate 22b has a further pin 24b to which the hydraulic cylinder of track tensioning device 7b is mechanically connected. The cylinder rests on a support 25b integral with beam 8b and is hingeably connected thereto by means of a respective pin 26b.

Track tensioning wheel 6b is divided into two rims 25b, 26b, which are fitted to hub 23b by a number of bolts 27b. To tension track 14b to a desired level, the hydraulic cylinder of track tensioning device 7b is simply activated, by means of a hydraulic circuit (not shown), to push pin 24b forward thereby rotating plate 22b about pin 21b, which connects plate 22b to beak 20b of beam 8b. This rotation of plate 22b moves track tensioning wheel 6b forward to tension track 14b as required.

As shown in more detail in Figures 3 and 5, vehicle 1 further comprises a transverse supporting device 28 mechanically connecting longitudinal box-shaped beams 8a and 8b.

In the first embodiment shown in Figure 3, transverse device 28 comprises a first member 29a connected mechanically to beam 8a, a second member 29b connected mechanically to beam 8b, and a third member 29c suspended from frame 3. Third member 29c can be divided theoretically into a box-shaped first portion 29c' and a second portion 29c" in the form of a substantially triangular plate and attached integrally to first portion 29c'. The positions of first and second members 29a, 29b are adjustable with respect to third member 29c by means of respective adjusting and fastening means 30a, 30b, so as to adapt the overall length of transverse supporting device 28 to the required width H of vehicle 1.

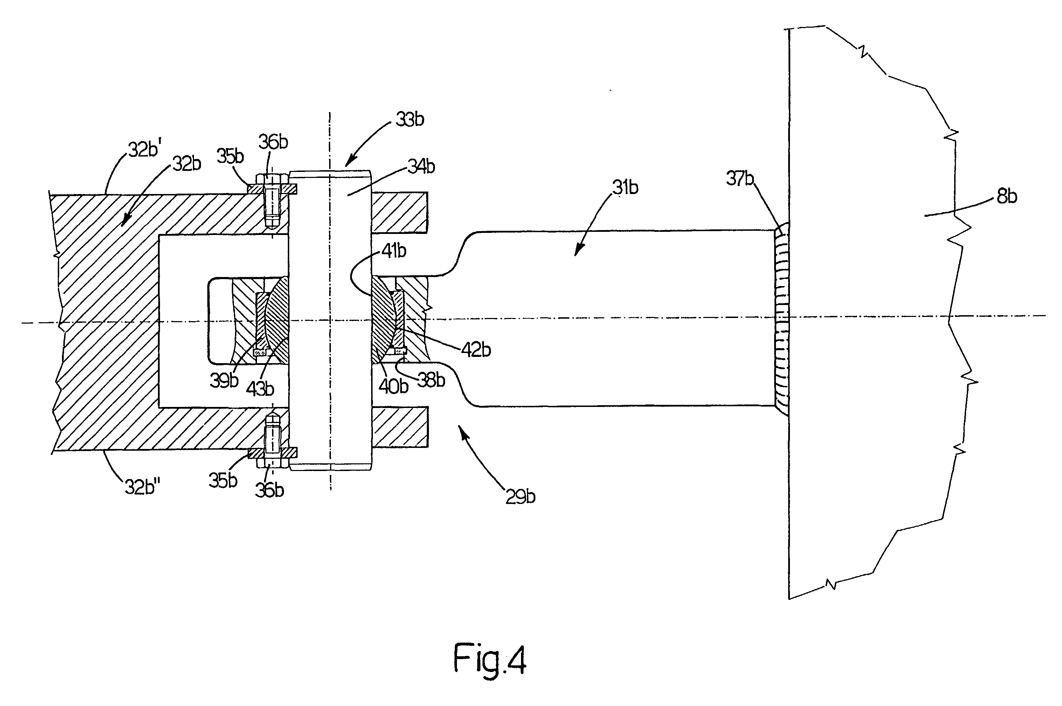

In the Figure 3 embodiment, each member 29a, 29b comprises a hip-shaped extension 31a, 31b connected to a respective knuckle 32a, 32b forming a respective articulated joint 33a, 33b. As shown in more detail in Figure 4, for example, articulated joint 33b comprises a pin 34b fitted to knuckle 32b by two lock plates 35b fastened by respective bolts 36b to two faces 32b', 32b" of knuckle 32b. One end of extension 31b is welded to beam 8b at 37b whereas at the opposite end extension 31b is provided with a seat 38b for receiving a bearing 39b. The bearing houses a ball 40b provided with a central, through running hole 41b for receiving pin 34b, which, as stated, is fixed to knuckle 32b by plates 35b and bolts 36b. In other words, articulated joint 33b is designed to permit a rotational movement between bearing 39b and ball 40b at their contact surface 42b, and a sliding movement between ball 40b and pin 34b at their contact surface 43b.

By enabling extension 31b to rotate with respect to knuckle 32b, articulated joint 33b provides for effectively adapting the position of track 14b to the contours of the ground. The same also applies to side 1a.

As shown in Figures 3 and 5, means 30a and 30b are identical, and each comprise a channel 44a, 44b formed in first portion 29c' of third member 29c in which respective knuckle member 32a, 32b slides. Means 30a and 30b further comprise a series of bores 45a, 45b formed in member 32a, 32b and a series of bores 46a, 46b formed in first portion 29c'. By means of adjusting pins 47a, 47b inserted simultaneously inside two aligned bores 45a, 46a and 45b, 46b, it is possible to fix the positions of members 32a, 32b with respect to the box-shaped first portion 29c' of third member 29c which is suspended from frame 3 by means of a pin 48.

In use, to adjust the width H of vehicle 1 by moving beams 8a and 8b with respect to each other, the operator simply removes pins 47a, 47b from the respective aligned bores 45a, 46a and 45b, 46b, slides the members 32a, 32b along respective grooves 44a, 44b into the required position with respect to third member 29c, and re-inserts pins 47a, 47b inside newly aligned bores 45a, 46a and 45b, 46b. Obviously, hubs 10a, 10b respectively supporting rear wheels 5a, 5b must also be moved with respect to each other to adapt the distance between the hubs to the new width H.

The Figure 5 embodiment, from which the present invention starts, is different from Figure 3 in that the hip-shaped members 31a, 31b in this case are formed integral with respective knuckle members 32a, 32b. In other words, in the embodiment shown in Figure 5, articulated joints 33a, 33b are eliminated, and third member 29c is fixed to frame 3 by a series of bolts 49.

## Claims

1. A crawler vehicle (1), comprising :
- a main frame (3) having a first (1a) and a second (1b) longitudinal side symmetrical with respect to a central longitudinal axis of symmetry (A);
- an engine (M);
- a rear axle (4) drivingly connected to said engine (M);
- a first (5a) and a second (5b) rear drive wheel associated with said first side (1a) and said second side (1b) respectively, said wheels (5a, 5b) being supported by said rear axle (4);
- a first (6a) and a second (6b) front track tensioning wheel associated with said first (1a) and said second (1b) side respectively, each front track tensioning wheel (6a, 6b) also being associated with a respective track tensioning device (7a, 7b);
- a first (14a) and a second (14b) toothed rubber track associated with said first (1a) and said second (1b) side respectively;
- a first (16a) and a second (16b) carriage assembly of said first track (14a) and said second track (14b) respectively, said first (16a) and said second (16b) carriage assembly each comprising at least one respective supporting roller (17a, 17b);
- a first longitudinal beam (8a) and a second longitudinal beam (8b) respectively connecting said first rear wheel (5a) to said first front track tensioning wheel (6a), and said second rear wheel (5b) to said second front track tensioning wheel (6b); and
- a transverse supporting device (28) connecting said first longitudinal beam (8a) to said second longitudinal beam (8b); said transverse supporting device (28) comprising :
- a first member (29a) connected mechanically to said first longitudinal beam (8a);
- a second member (29b) connected mechanically to said second longitudinal beam (8b); and
- a third member (29c) suspended centrally from said frame (3); the positions of said first member (29a) and said second member (29b) being adjustable and fixable with respect to said third member (29c) by means of respective adjusting and fastening means (30a, 30b), so as to adapt the overall length of said transverse supporting device (28) to the desired width (H) of the vehicle (1); and
**characterized in that** said first member (29a) and said second member (29b) each comprise a first portion (31a, 31b) integral with the respective longitudinal beam (8a, 8b) and a second portion (32a, 32b) connected mechanically to the respective first portion (31a, 31b) by means of a respective articulated joint (33a, 33b).

2. A vehicle (1) according to claim 1, **characterized in that** each said articulated joint (33a, 33b) comprises a bearing (39a, 39b) integral with said first portion (31a, 31b), and a pin (34a, 34b) integral with said second portion (32a, 32b), or vice versa; a ball (40a, 40b) being interposed between said bearing (39a, 39b) and said pin (34a, 34b) allowing rotational movement between said first portion (31a, 31b) and said second portion (32a, 32b) .

3. A vehicle (1) according to claim 2, **characterized in that** said ball (40a, 40b) is slidingly supported by said pin (34a, 34b) allowing sliding movement of said first portion (31a, 31b) relative to said second portion (32a, 32b) along the longitudinal axis of said pin (34a, 34b).

4. A vehicle (1) according to any of the preceding claims, **characterized in that** each of said articulated joints (33a, 33b) has at least two contact surfaces (42a, 43a, 42b, 43b) for allowing movement of the respective first portion (31a, 31b) with respect to the corresponding second portion (32a, 32b).

5. A vehicle (1) according to any of the preceding claims, **characterized in that** said third member (29c) is suspended from said frame (3) by a pivot connection (48).

6. A vehicle (1) according to any of the preceding claims, **characterized in that** said third member (29c) comprises a first portion (29c') and a second portion (29c"); said first portion (29c') at least partly housing said adjusting and fastening means (30a, 30b).

7. A vehicle (1) according to claim 6, **characterized in that** said first portion (29c') of said third member is substantially box-shaped and at least partly houses said first member (29a) and said second member (29b).

8. A vehicle (1) according to claim 7, **characterized in that** said first portion (29c') of said third member (29c) comprises two sets of bores (46a, 46b) selectively alignable with another set of bores (45a, 45b) in the respective second portions (32a, 32b) for selectively fixing the second portions (32a, 32b) to said first portion (29') by means of locking means (47a, 47b) at different positions.

9. A vehicle (1) according to any of the preceding claims, **characterized in that** said first longitudinal beam (8a) and said second longitudinal beam (8b) both have a substantially box-shaped structure.

## Patentansprüche

1. Raupenkettenfahrzeug (1) mit:
- einem Hauptrahmen (3), der eine erste (1a) und eine (1b) längsverlaufende Seite symmetrisch bezüglich einer sich in Längsrichtung erstreckenden Symmetrie-Mittelachse (A) aufweist,
- einem Motor (M),
- einer Hinterachse (4), die antriebsmäßig mit dem Motor verbunden ist,
- einem ersten (5a) und einem zweiten (5b) hinteren Antriebsrad, das der ersten Seite (1a) bzw. der zweiten Seite (1b) zugeordnet ist, wobei die Räder (5a, 5b) von der Hinterachse (4) gehaltert sind,
- einem ersten (6a) und einem zweiten (6b) vorderen Kettenspannrad, das der ersten (1a) bzw. zweiten (1b) Seite zugeordnet ist, wobei jedem vorderen Kettenspannrad (6a, 6b) eine jeweilige Kettenspannvorrichtung (7a, 7b) zugeordnet ist,
- einer ersten (14a) und einer zweiten (14b) mit Zähnen versehenen Gummikette, die der ersten (1a) bzw. zweiten (1b) Seite zugeordnet ist,
- einer ersten (16a) und einer zweiten (16b) Laufwerk-Baugruppe der ersten Kette (14a) bzw. der zweiten Kette (14b), wobei die erste (16a) und die zweite (16b) Laufwerk-Baugruppe jeweils zumindest eine jeweilige Laufrolle (17a, 17b) aufweisen,
- einem ersten längsgerichteten Träger (8a) und einem zweiten längsgerichteten Träger (8b), die jeweils das erste Hinterrad (5a) mit dem ersten vorderen Kettenspannrad (6a) und das zweite Hinterrad (5b) mit dem zweiten vorderen Kettenspannrad (6b) verbinden, und
- einer sich in Querrichtung erstreckenden Tragvorrichtung (28), die den ersten längsgerichteten Träger (8a) mit dem zweiten längsgerichteten Träger (8b) verbindet, wobei die sich in Querrichtung erstreckende Tragvorrichtung (28) folgendes umfaßt:
- ein erstes Bauteil (29a), das mechanisch mit dem ersten sich in Längsrichtung erstreckenden Träger (8a) verbunden ist,
- ein zweites Bauteil (29b), das mechanisch mit dem zweiten sich in Längsrichtung erstreckenden Träger (8b) verbunden ist, und
- ein drittes Bauteil (29c), das mittig an dem Rahmen (3) aufgehängt ist, wobei die Positionen des ersten Bauteils (29a) und des zweite Bauteils (29b) gegenüber dem dritten Bauteil (29c) mit Hilfe von jeweiligen Einstell- und Befestigungsmitteln (30a, 30b) derart einstellbar und festlegbar sind, daß die Gesamtlänge der sich in Querrichtung erstreckenden Tragvorrichtung (28) an die gewünschte Breite (H) des Fahrzeuges (1) angepaßt wird, und
**dadurch gekennzeichnet, daß** das erste Bauteil (29a) und das zweite Bauteil (29b) jeweils einen ersten Abschnitt (31a, 31b), der einstückig mit dem jeweiligen längsgerichteten Träger (8a, 8b) verbunden ist, und einen zweiten Abschnitt (32a, 32b) umfassen, der mechanisch mit dem jeweiligen ersten Abschnitt (31a, 31b) mit Hilfe einer jeweiligen Gelenkverbindung (33a, 33b) verbunden ist.

2. Fahrzeug (1) nach Anspruch 1, **dadurch gekennzeichnet, daß** die Gelenkverbindung (33a, 33b) ein einstückig mit dem ersten Abschnitt (31a, 31b) ausgebildetes Lager (39a, 39b) und einen mit dem zweiten Abschnitt (32a, 32b) einstückig verbundenen Bolzen (34a, 34b) oder umgekehrt umfaßt, wobei eine Kugel (40a, 40b) zwischen dem Lager (39a, 39b) und dem Bolzen (34a, 34b) eingefügt ist und eine Drehbewegung zwischen dem ersten Abschnitt (31a, 31b) und dem zweiten Abschnitt (32a, 32b) ermöglicht.

3. Fahrzeug (1) nach Anspruch 2, **dadurch gekennzeichnet, daß** die Kugel (40a, 40b) durch den Bolzen (34a, 34b) gleitend gehaltert ist und eine Gleitbewegung des ersten Abschnittes (31a, 31b) gegenüber dem zweiten Abschnitt (32a, 32b) entlang der Längsachse des Bolzens (34a, 34b) ermöglicht.

4. Fahrzeug (1) nach einem der vorhergehenden Ansprüche, **dadurch gekennzeichnet, daß** jede der Gelenkverbindungen (33a, 33b) zumindest zwei Kontaktoberflächen (42a, 43a, 42b, 43b) aufweist, um eine Bewegung des jeweiligen ersten Abschnittes (31a, 31b) gegenüber dem entsprechenden zweiten Abschnitt (32a, 32b) zu ermöglichen.

5. Fahrzeug (1) nach einem der vorhergehenden Ansprüche, **dadurch gekennzeichnet, daß** das dritte Bauteil (29c) an dem Rahmen (3) durch eine Schwenkverbindung (48) aufgehängt ist.

6. Fahrzeug (1) nach einem der vorhergehenden Ansprüche, **dadurch gekennzeichnet, daß** das dritte Bauteil (29c) einen ersten Abschnitt (29c') und einen zweiten Abschnitt (29c") umfaßt, daß der erste Abschnitt (29c') zumindest teilweise die Einstell- und Befestigungsmittel (30a, 30b) aufnimmt.

7. Fahrzeug (1) nach Anspruch 6, **dadurch gekennzeichnet, daß** der erste Abschnitt (29c') des dritten Bauteils im wesentlichen kastenförmig ist und zumindest teilweise das erste Bauteil (29a) und das zweite Bauteil (29b) aufnimmt.

8. Fahrzeug (1) nach Anspruch 7, **dadurch gekennzeichnet, daß** der erste Abschnitt (29c') des dritten Bauteils (29c) zwei Sätze von Bohrungen (46a, 46b) umfaßt, die selektiv mit anderen Sätzen von Bohrungen (45a, 45b) in den jeweiligen zweiten Abschnitten (32a, 32b) ausrichtbar sind, um selektiv die zweiten Abschnitte (32a, 32b) an dem ersten Abschnitt (29') mit Hilfe von Verriegelungseinrichtungen (47a, 47b) in unterschiedlichen Stellungen festzulegen.

9. Fahrzeug (1) nach einem der vorhergehenden Ansprüche, **dadurch gekennzeichnet, daß** der erste sich in Längsrichtung erstreckende Träger (8a) und der zweite sich in Längsrichtung erstreckende Träger (8b) beide eine im wesentlichen kastenförmige Struktur aufweisen.

## Revendications

1. Véhicule à chenilles (1), comprenant :
- un châssis principal (3) possédant un premier (la) et un second flancs (1b) longitudinaux symétriques par rapport à un axe longitudinal central de symétrie (A) ;
- un moteur (M) ;
- un essieu arrière (4) relié avec entraînement audit moteur (M);
- une première (5a) et une seconde (5b) roues d'entraînement arrière associées respectivement audit premier flanc (1a) et audit second flanc (1b), lesdites roues (5a, 5b) étant supportées par ledit essieu arrière (4) ;
- une première (6a) et une seconde (6b) roues avant de tension de chenille associées respectivement audit premier flanc (1a) et audit second flanc (1b), chaque roue de tension (6a, 6b) de chenille avant étant également associée à un dispositif respectif de tension de chenille (7a, 7b) ;
- une première (14a) et une seconde (14b) chenilles dentées en caoutchouc associées respectivement audit premier flanc (1a) et audit second flanc (1b);
- un premier (16a) et un second (16b) assemblages de chariot respectivement de ladite première chenille (14a) et de ladite seconde chenille (14b), ledit premier assemblage (16a) et ledit second assemblage (16b) de chariot comprenant tous deux aux moins un galet de support respectif (17a, 17b);
- une première poutre longitudinale (8a) et une seconde poutre longitudinale (8b) raccordant respectivement ladite première roue arrière (5a) à ladite première roue avant de tension de chenille (6a), et ladite seconde roue arrière (5b) à ladite seconde roue avant de tension de chenille (6b); et
- un dispositif de support transversal (28) raccordant ladite première poutre longitudinale (8a) à ladite seconde poutre longitudinale (8b); ledit dispositif de support transversal (28) comportant :
- un premier organe (29a) raccordé mécaniquement à ladite première poutre longitudinale (8a) ;
- un second organe (29b) raccordé mécaniquement à ladite seconde poutre longitudinale (8b); et
- un troisième organe (39c) suspendu centralement audit châssis (3); les positions dudit premier organe (29a) et dudit second organe (29b) pouvant être adaptées et fixées par rapport audit troisième organe (29c) avec des moyens respectifs d'ajustement et de fixation (30a, 30b), de façon à adapter la longueur générale dudit dispositif de support (28) transversal à la largeur souhaitée (H) du véhicule (1); et
**caractérisé en ce que** ledit premier organe (29a) et ledit second organe (29b) comprennent tous deux une première portion (31a, 31b) faisant partie intégrante avec la poutre longitudinale respective (8a, 8b) et une seconde portion (32a, 32b) raccordée mécaniquement à la première portion respective (31a, 31b) au moyen d'un assemblage articulé respectif (33a, 33b).

2. Véhicule (1) selon la revendication 1, **caractérisé en ce que** chaque dit assemblage articulé (33a, 33b) comprend un coussinet (39a, 39b) faisant partie intégrante de ladite première portion (31a, 31b), et une broche (34a, 34b) faisant partie intégrante de ladite seconde portion (32a, 32b), ou vice versa; une bille (40a, 40b) étant interposée entre ledit coussinet (39a, 39b) et ladite broche (34a, 34b) permettant un mouvement rotatif entre ladite première portion (31a, 31b) et ladite seconde portion (32a, 32b).

3. Véhicule (1) selon la revendication 2, **caractérisé en ce que** ladite bille (40a, 40b) est supportée avec coulissement par ladite broche (34a, 34b) permettant le coulissement de ladite première portion (31a, 31b) par rapport à ladite seconde portion (32a, 32b) le long de l'axe longitudinal de ladite broche (34a, 34b).

4. Véhicule (1) selon l'une quelconque des revendications précédentes, **caractérisé en ce que** chacun desdits assemblages articulés (33a, 33b) possède au moins deux surfaces de contact (42a, 43a, 42b, 43b) pour permettre le mouvement de la première portion respective (31a, 31b) par rapport à la seconde portion correspondante (32a, 32b).

5. Véhicule (1) selon l'une quelconque des revendications précédentes, **caractérisé en ce que** ledit troisième organe (29c) est suspendu audit châssis (3) par une liaison par pivotement (48).

6. Véhicule (1) selon l'une quelconque des revendications précédentes, **caractérisé en ce que** ledit troisième organe (29c) comprend une première portion (29c') et une seconde portion (29c"); ladite première portion (29c') abritant au moins partiellement lesdits moyens de réglage et de fixation (30a, 30b).

7. Véhicule (1) selon la revendication 6, **caractérisé en ce que** ladite première portion (29c') dudit troisième organe est substantiellement en forme de caisson et abrite au moins partiellement ledit premier organe (29a) et ledit second organe (29b).

8. Véhicule (1) selon la revendication 7, **caractérisé en ce que** ladite première portion (29c') dudit troisième organe (29c) comprend deux jeux d'alésages (46a, 46b) sélectivement alignables avec un autre jeu d'alésages (45a, 45b) dans les secondes portions respectives (32a, 32b) pour fixer sélectivement à différentes positions les secondes portions (32a, 32b) à ladite première portion (29') à l'aide de moyens de verrouillage (47a, 47b).

9. Véhicule (1) selon l'une quelconque des revendications précédentes, **caractérisé en ce que** ladite première poutre longitudinale (8a) et ladite seconde poutre longitudinale (8b) possèdent toutes deux une structure substantiellement en forme de caisson.
